# EUROPÄISCHE PATENTSCHRIFT

(11) **EP 1 400 190 B1**
(45) Veröffentlichungstag und Bekanntmachung des Hinweises auf die Patenterteilung: **03.09.2008**
(21) Anmeldenummer: 03019043.3
(22) Anmeldetag: 22.08.2003
(51) Int. Cl.: A47C 20/04

(54) **Elektromotorischer Möbelantrieb**
Electromotive furniture drive
Entraînement électromoteur pour meuble

(30) Priorität: 20.09.2002 DE 20214565 U
(43) Veröffentlichungstag der Anmeldung: 24.03.2004
(73) Patentinhaber: Dewert Antriebs- und Systemtechnik GmbH & Co. KG, 32278 Kirchlengern (DE)
(72) Erfinder: Roither, Andreas, 32130 Enger (DE)
(74) Vertreter: Dantz, Jan Henning

(56) Entgegenhaltungen:
- EP-A- 0 311 478
- EP-A- 0 995 714
- WO-A-96/20361

## Beschreibung

Die Erfindung betrifft einen elektromotorischen Möbelantrieb mit einer Spindel und einer darauf aufgesetzten Spindelmutter.

Der in Frage kommende elektromotorische Möbelantrieb ist in vielen Ausführungen bekannt. Er kann mit einem Antriebsmotor und einer Spindel ausgestattet sein, er kann jedoch auch mit mehreren Spindeln ausgestattet sein, die von zugeordneten Antriebsmotoren oder von einem gemeinsamen Antriebsmotor angetrieben werden. Derartige Antriebe werden als Einzel- oder Doppelantriebe bezeichnet. Ferner sind auch Ausführungen bekannt, bei denen das Abtriebsglied eines die Drehzahl des Antriebsmotors herabsetzenden Getriebes angetrieben wird und die Spindel feststeht. Der gesamte Antrieb wird dann bei eingeschaltetem Antriebsmotor auf der Spindel verfahren. Die in Rede stehenden Möbelantriebe sind als Massenartikel anzusehen und sollen möglichst kostengünstig herzustellen sein. Bevorzugt werden sie als Antriebe für Liegeelemente und Sessel verwendet. Da sie nicht im Dauerbetrieb betrieben werden, wird eine Werkstoffkombination der miteinander in Eingriff stehenden Spindelmutter und der Spindel gewählt, die auch beim Betrieb über einen längeren Zeitraum ohne Hinzugabe eines Schmiermittels betrieben werden kann. In einer bevorzugten Ausführung ist die Spindel aus einem Stahl und die Spindelmutter aus einem Kunststoff gefertigt. Aufgrund der Eigenschaften dieser Werkstoffe ist der Verschleiß der Gewindegänge der Spindelmutter höher als der der Spindel. Darüber hinaus ist die Belastbarkeit eines aus einem Kunststoff gefertigten Bauteils nicht so hoch wie die eines aus Stahl gefertigten. Demzufolge muss bei den Möbelantrieben die Spindelmutter als ein Verschleißteil angesehen werden. Es wäre deshalb notwendig, die Spindelmutter auszutauschen, wenn ein vorgegebenes Spiel zwischen den Gewindegängen der Spindelmutter und der Spindel erreicht ist. Dies wird jedoch von den Benutzern nicht erkannt, so dass es zum Bruch der Spindelmutter kommen kann, wodurch der Antrieb nicht mehr funktionsfähig ist.

Es sind deshalb die in Rede stehenden Möbelantriebe mit einer so genannten Sicherheitsspindelmutter ausgerüstet, die in mehreren Ausführungen bekannt ist, diese Sicherheitsspindelmutter besteht aus einer Sicherheitsmutter und aus einer Arbeitsmutter. Diese beiden Muttern können fest miteinander verbunden sein, sie können jedoch auch über Verbindungselemente, beispielsweise Stifte miteinander verbunden sein, die beim Überschreiten eines bestimmten Drehmomentes abscheren. Derartige Lösungen sind nicht zufriedenstellend, da die Sicherheitsmutter die Funktion der Spindelmutter übernimmt, wenn diese aufgrund des Verschleißes einen Zustand erreicht hat, in der die Funktion nicht mehr gewährleistet ist. Der Mobelantrieb kann dann noch so lange weiterbetrieben werden, bis auch die Sicherheitsmutter nicht mehr funktionsfähig ist bzw. zerbricht. Daraus ergibt sich, dass die Betriebsdauer nur verlängert wird, dass jedoch dem Benutzer nicht rechtzeitig signalisiert wird, dass ein Austausch der Spindelmutter notwendig ist. Die bislang gemachten Vorschläge sind demzufolge keine Lösung des Problems.

Bei einem aus der WO 96/20361 bekannten Linearantrieb für Möbel besteht die auf die Spindel aufgesetzte Sicherheitsmutter aus einer Hauptmutter, aus einem Kunststoff und aus einer metallischen, scheibenförmigen Sicherheitsmutter, die in eine Ausnehmung der Hauptmutter formschlüssig eingesetzt ist. Der Formschluss wird durch Mitnehmerwülste gebildet, die in entsprechend gestaltete Schlitze eingreifen. Die Mitnehmerwülste und die Schlitze sind so angepasst, dass die Wülste von der Hauptmutter durch eine vorbestimmte Belastung abgebrochen werden, was einem Versagen der Hauptmutter gleichzusetzen ist. Durch Versagen der Hauptmutter übemimmt die Sicherheitsmutter die Belastung auf eine Ausfahrstange, die mit der Hauptmutter verbunden ist. Aufgrund der dadurch hervorgerufenen Reibung zwischen der Sicherheitsmutter und der Spindel haftet die Mutter an der Spindel und nimmt an deren Drehung teil. Durch den Bruch der Mitnehmerwülste rotiert die Sicherheitsmutter frei gegen die Hauptmutter, während der Boden der Ausnehmung, in dem die Sicherheitsmutter eingesetzt ist, als Gleitlager wird. Dadurch wird der Antrieb dann nur in seine Ursprungsposition zurückkehren können, da die Reibung zwischen der Sicherheitsmutter und der Spindel verschwindet, wenn die Mutter manuell entlastet wird. Somit kann manuell eine Fehlfunktion beseitigt werden, die fast immer durch ein plötzliches Anhalten während eines Verstellvorganges auftritt. Es ist zwar als Reaktion eine Umkehrbewegung durchführbar, da die Sicherheitsmutter entlastet wird und die Reibung vollständig oder teilweise verschwindet. Es ist jedoch nicht möglich, eine weitere Ausfahrbewegung der Ausfahrstange zu erreichen.

Nachteilig ist bei dieser Ausführung, dass die Anzahl der Bauteile nicht minimiert ist, und dass es beim Ausfall der Hauptmutter zum Bruch kommt, woraus man schließen könnte, dass der Linearantrieb unterdimensioniert ist.

Aus der EP 0 311 478 A1 ist eine motorische Sitzverstellung bekannt, die als Linearantrieb mit wenigstens einer Spindel arbeitet. Gemäß bevorzugter Ausführungsbeispiele ist der Spindeltrieb als Doppelspindeltrieb ausgestattet, der eine Innen-und Außengewinde aufweisende Hohlspindel und eine mit dem Innengewinde in Eingriff stehende Spindel aufweist, die an einem Ende ortsfest gelagert ist. Die Hohlspindel wird von einem Motor angetrieben und auf diese Hohlspindel ist eine Spindelmutter aufgesetzt. Bei Drehung der Hohlspindel verschiebt sich diese gegenüber der ortsfesten Spindel und die Spindelmutter verschiebt sich gegenüber der Hohlspindel, so dass die Verstellgeschwindigkeit erhöht wird. Die miteinander in Eingriff stehenden Gewindegänge werden bei solchen Linearantrieben jedoch nur relativ schwach belastet, da der Kraftfahrzeugsitz ausschließlich in einer horizontalen Ebene verstellt wird, so dass die Gewindegänge nur, wenn überhaupt, einem relativ geringen Verschleiß unterlegen sind.

Der Erfindung liegt die Aufgabe zugrunde, einen elektromotorischen Möbelantrieb der eingangs näher beschriebenen Art so zu gestalten, dass der Anwender wahrnehmen kann, wenn die Gewindegänge der Spindelmutter bis zu einem bestimmten Grad verschlissen sind, so dass entschieden werden kann, dass die Spindelmutter ausgewechselt wird oder dass bei einem Bruch der Spindelmutter gegebenenfalls dass angeschlossene Bauteil noch abgesenkt werden kann, dass aber auf keinen Fall der Betrieb des Möbelantriebes ermöglicht wird.

Gemäß einem ersten Vorschlag zur Lösung der gestellten Aufgabe ist vorgesehen, dass die Spindelmutter Sicherheitsgewindegänge und Bewegungsgewindegänge aufweist, und dass das Spiel der Sicherheitsgewindegänge gegenüber den Gewindegängen der Spindel größer ist als das der Bewegungsgewindegänge zu den Gewindegängen der Spindel, und dass die Sicherheitsgewindegänge der Spindelmutter Teil eines Gewindeeinsatzes sind, der in die Spindelmutter eingesetzt oder angesetzt ist, und der mit der Spindelmutter in einer Mitnahmeverbindung steht.

Für die Herstellung der Spindelmutter ist es vorteilhaft, dass die Sicherheitsgewindegänge Teil eines Gewindeeinsatzes sind, der mit der Spindelmutter in einer Mitnahmeverbindung steht. Die Anordnung des Gewindeeinsatzes kann in verschiedenen Arten erfolgen, beispielsweise, indem er in eine entsprechend gestaltete Ausnehmung der Spindelmutter eingesetzt, vorzugsweise formschlüssig eingesetzt ist. Diese Ausführung ist vorteilhaft, wenn der Möbelantrieb von vornherein mit der Sicherheitsgewindegänge aufweisenden Spindelmutter ausgerüstet ist.

Die Spindelmutter kann auch als Sicherheitsspindelmutter bezeichnet werden, da man davon ausgehen kann, dass im Normalfall kein Bruch möglich ist, wie noch erläutert wird. Im normalen Betriebszustand kommen nur die Bewegungsgewindegänge mit den Gewindegängen der Spindel in Kontakt die Sicherheitsgewindegänge sind ohne Funktion. Sind die Bewegungsgewindegänge durch den Betrieb des elektromotorischen Möbelantriebes bis zu einem bestimmten Grad oder bis auf ein bestimmtes Maß verschlissen, kommen auch die Sicherheitsgewindegänge mit den Gewindegängen der Spindel in Kontakt. Diese Umstand kann in verschiedener Weise ausgenutzt werden, um dem Anwender anzuzeigen, dass ein Austausch der Spindelmutter notwendig ist, um eine Zerstörung und somit einen Ausfall des Möbelantriebes zu verhindern. Gemäß einer ersten Ausführungsform ist vorgesehen, dass die Sicherheitsgewindegänge der Spindelmutter bei Kontakt mit den Gewindegängen der Spindel eine Brems- oder Blockiereinrichtung bilden. Sofern sie eine Bremseinrichtung bilden, konnten sie so ausgelegt sein, dass das an den Möbelantrieb angeschlossene Bauteil noch abgesenkt werden kann, dass jedoch ein Anheben aufgrund der höheren Kraft nicht mehr möglich ist. Sofern sie als Blockiereinrichtung ausgelegt sind, wäre ein verfahren nicht mehr möglich. In beiden Fällen könnte die Abschaltung durch die Überstromerkennung erfolgen, mit denen der Möbelantrieb im Normalfall ausgerüstet ist. Die Brems- oder Blockierwirkung könnte durch eine entsprechende Auslegung der Sicherheitsgewindegänge erfolgen indem beispielsweise die die Gewindegänge definierenden Werte geändert werden.

Gemäß einer zweiten Lösung ist vorgesehen, dass die Sicherheitsgewindegänge aus einem Material bestehen, welches gegenüber den Bewegungsgewindegängen eine höhere Festigkeit aufweist. Sind beispielsweise die Bewegungsgewindegänge aus einem Kunststoff gefertigt, könnten die Sicherheitsgewindegänge aus einem verstärkten Kunststoff, vorzugsweise einem Glasfaser verstärkten Kunststoff bestehen. Es ist jedoch auch möglich, dass die Sicherheitsgewindegänge aus dem gleichen Material wie die Gewindegänge der Spindel bestehen, üblicherweise besteht die Spindel aus Stahl. Es kommt dann zu der unüblichen Werkstoffkombination die zum Quietschen führen würde, so dass das als Signal für einen Wechsel der Spindelmutter gewertet werden kann. Außerdem würde beim weiteren Betrieb des Möbelantriebes diese unübliche Werkstoffkombination zu einer Schwergängigkeit führen, so dass die Überstromerkennung wieder aktiviert würde.

Es ist jedoch auch möglich, dass der Gewindeeinsatz an die Spindelmutter funktionsgerecht angeflanscht ist. Diese Ausführung würde sich für die Nachrüstung von bereits sich in Betrieb befindenden Möbelantrieben anbieten. Zweckmäßigerweise ist der Gewindeeinsatz als Kegelstumpf derart ausgebildet, dass bei Kontakt der Sicherheitsgewindegänge mit den Gewindegängen der Spindel ein wahrnehmbares Geräusch, eine Bremsung oder eine Blockierung der Spindel erfolgt. Sofern eine Bremsung oder eine Blockierung der Spindel erfolgt, würde die Überstromerkennung wiederum aktiviert. Der kegelstumpfförmige Gewindeeinsatz könnte so ausgelegt und so mit der Spindelmutter in Kontakt stehen, dass bei Kontakt der Sicherheitsgewindegänge mit den Gewindegängen der Spindel sich der Gewindeeinsatz ein kleinwenig verschiebt, so dass von außen Kräfte einwirken, die zu einer Verformung führen, so dass die Bremsung oder die Blockierung erfolgt.

Besonders vorteilhaft ist, wenn der Gewindeeinsatz mit wenigstens einem Längsschlitz versehen ist, der einen Steg der Spindelmutter übergreift. Dadurch erfolgt eine formschlüssige Verbindung zwischen der Spindelmutter und dem Gewindeeinsatz so dass eine unverdrehbare Verbindung gegeben ist. Außerdem erleichtert der Längsschlitz die Verformung des Gewindeeinsatzes zwecks der Herbeiführung der Blockade oder der Bremsung. Damit sich der Gewindeeinsatz verformen kann, ist es vorteilhaft, wenn zusätzlich zu dem Längsschlitz noch ein oder mehrere Schlitze in dem Gewindeeinsatz vorgesehen sind. Diese Schlitze erstrecken sich jedoch nicht über die gesamte Länge, in bevorzugter Ausführung sind sie jedoch länger als die halbe Länge des Gewindeeinsatzes.

Gemäß einer weiteren Ausführungsform ist vorgesehen, dass der Gewindeeinsatz als Doppelkegelstumpf ausgebildet ist, so dass die Außenfläche durch zwei gegensinnig geneigte Kegelflächen gebildet ist. Bei dieser Ausführung würde der Gewindeeinsatz bei einer Verschiebung in beiden Richtungen verformt, so dass eine Bremsung oder Blockierung sowohl beim Anheben als auch beim Absenken des angeschlossenen Bauteils erfolgen. Auch dieser Gewindeeinsatz könnte mit einem Längsschlitz ausgestattet sein.

Gemäß einer weiteren Ausführung ist vorgesehen, dass die mit dem Gewindeeinsatz ausgestattete Spindelmutter aus zwei Halbschalen gebildet ist. Dadurch wird eine montagefreundliche Ausführung geschaffen. Die Halbschalen sind zweckmäßigerweise über ein Filmscharnier miteinander verbunden, so dass die Teile nicht versehentlich verloren gehen. Damit im Bereich der Trennfuge kein Versatz zwischen den Gewindeflanken der beiden Halbschalen entsteht, ist es zweckmäßig, wenn an einer Halbschale Zentrierstifte und an der anderen Halbschale lagegerecht entsprechende Zentrierbohrungen vorgesehen sind. Dadurch wird eine Verschiebung einer Halbschale in Längsrichtung der Spindel vermieden. Die Halbschalen könnten entweder formschlüssig in einem Führungskanal des Möbelantriebs geführt sein oder sie könnten über Verbindungselemente miteinander verbunden sein. In vorteilhafter Weise ist die Spindelmutter im Querschnitt kreisringförmig gestaltet. Zur Sicherung gegen Verdrehung ist sie dann auf der Außenfläche mit mehreren sich in Längsrichtung erstreckenden Führungsstegen ausgestattet, die in Führungsnuten des Flanschrohres eingreifen.

Gemäß einer weiteren Ausführungsform ist vorgesehen, dass der Gewindeeinsatz an eine Stirnfläche der Spindelmutter angesetzt, und formschlüssig mit der Spindelmutter verbunden ist. Diese Ausführung ist zur Nachrüstung von bereits sich in Betrieb befindenden Möbelantrieben geeignet. Damit eine ausreichend feste Verbindung erzielt wird, ist vorgesehen, dass der Gewindeeinsatz in eine Hülse eingesetzt ist, die formschlüssig mit der Spindel verbunden ist. Diese Hülse weist zweckmäßigerweise an der der Spindelmutter zugewandten Stirnfläche Segmente auf, die in entsprechende gestaltete Ausnehmungen der Spindelmutter eingreifen. Die formschlüssige Verbindung kann auch als Rastverbindung ausgelegt sein. Dies erfolgt zweckmäßigerweise dadurch, dass die Hülse Federzungen aufweist, deren freie Enden als Rastnasen ausgebildet, die in eine Nut oder in Hinterschneidungen eingreifen. Diese Ausführung ist besonders geeignet, wenn der Gewindeeinsatz als Doppelkegel ausgebildet ist. In weiterer Ausgestaltung ist noch vorgesehen, dass der Gewindeeinsatz im Abstand zu einem Stirnendbereich einer zweiteiligen Spindelmutter angeordnet ist. Da der Gewindeeinsatz wiederum wenigstens eine konische Außenfläche aufweist, ist die Spindelmutter an der Stelle des Gewindeeinsatzes entweder mit einer entsprechenden konischen Gegenfläche ausgestattet oder es wird in die Spindelmutter eine entsprechende Innenkonushülse eingesetzt. Weitere Ausführungsformen sind denkbar. Wesentlich ist, dass die aus einem Kunststoff gefertigte Spindelmutter nicht zerbricht. Dieser Bruch erfolgt jedoch erst nach vorheriger Verformung bzw. nach einem entsprechenden Verschleiß der Gewindegänge. Dieses Versagen deutet sich dadurch an, dass sich die Spindelmutter relativ zur Spindel in Kraftrichtung verformt bzw. bewegt. Das bedeutet, dass die Gewindegänge des Gewindeeinsatzes nach und nach mit der Spindel Kontakt bekommen und eine tragende Funktion übernehmen. Durch die konische Gestaltung wird nach und nach die Spindelmutter gegen den Gewindeeinsatz gedrückt. Durch die in Längsrichtung verlaufenden Schlitze wird der Gewindeeinsatz nach und nach verformt, so dass seine Gewindegänge letztlich mit großer Kraft gegen die Spindel gedrückt werden, was zu einer deutlichen Erhöhung der Reibung führt. Diese Reibung kann in den beschriebenen Weisen ausgenutzt werden, um vor einem Bruch die Spindelmutter auszutauschen.

Gemäß einer zweiten Lösung wird vorgeschlagen, dass in wenigstens einem Gewindegang der Spindelmutter ein Kontaktelement eingesetzt ist, welches im Abstand, bezogen auf den ursprünglichen Zustand der Spindelmutter einer Fläche des Gewindeganges steht. Alternativ wäre es auch denkbar, dass in wenigstens einem Gewindegang des Gewindeeinsatzes ein Kontaktelement eingesetzt ist. Dies könnte sich auch bis zu einer Flanke des Gewindeganges erstrecken. Sobald dieses Kontaktelement die Spindel kontaktiert, könnte entweder dem Anwender angezeigt werden, beispielsweise durch Aufleuchten einer Lichtquelle oder durch ein akustisches Signal, dass die Spindelmutter ausgetauscht werden muss. Es wäre jedoch auch denkbar, dass der Antrieb stillgesetzt wird.

Anhand der beiliegenden Zeichnungen wird die Erfindung noch näher erläutert.
Es zeigen:
- Figur 1: Eine mit einem kegelstumpfförmigen Gewindeeinsatz ausgestattete Spindelmutter in einer sprengbildlichen Darstellung,
- Figur 2: die Spindelmutter nach der Figur 1 in Schnittdarstellung wobei der Gewindeeinsatz noch nicht eingesetzt ist,
- Figur 3: eine der Figur 2 entsprechende Darstellung mit eingesetztem Gewindeeinsatz,
- Figur 4: eine aus zwei Halbschalen bestehende Spindelmutter mit zwei doppelkegelstumpfförmigen Gewindeeinsätzen,
- Figur 5: eine der Fig. 4 entsprechende Darstellung jedoch im auseinander geklappten Zustand und noch nicht eingesetzten Gewindeeinsätzen und
- Figur 6: eine der Figur 5 entsprechende Darstellung jedoch mit eingesetzten Gewindeeinsätzen,
- Figur 7: eine weitere Ausführungsform, bei der der Gewindeeinsatz mittels einer Hülse an die Stirnseite der Spindelmutter angesetzt ist, in sprengbildlicher Darstellung,
- Figur 8: eine weitere Ausführungsform, bei der der Gewindeeinsatz mittels einer Hülse mit der Spindelmutter verrastet ist, in sprengbildlicher Darstellung,
- Figur 9: die Anordnung nach der Figur 8 im zusammengesteckten Zustand,
- Figur 10: eine ähnliche Ausführung wie die Figur 8 und die Figur 9 zeigen, jedoch mit einem Gewindeeinsatz mit einer einzigen konischen Außenfläche und
- Figur 11: eine weitere Ausführung, bei der der Gewindeeinsatz im Abstand zu einer Stirnfläche steht und in eine Innenkonushülse eingesetzt ist.

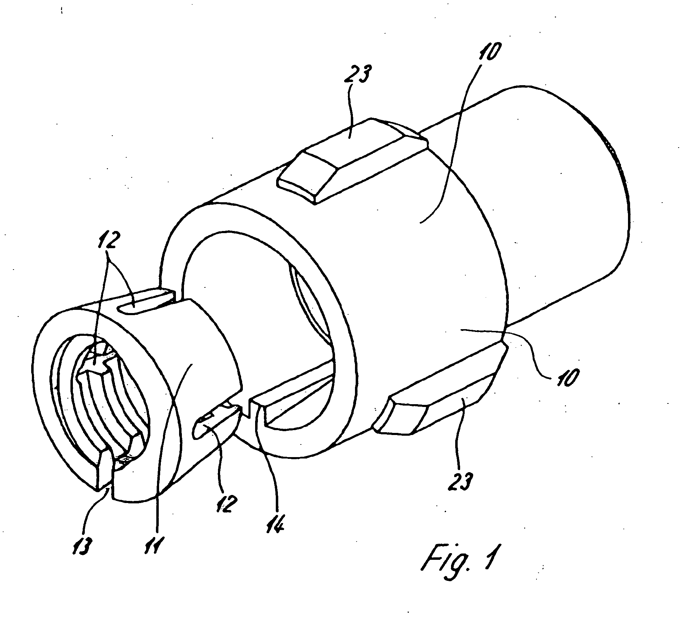

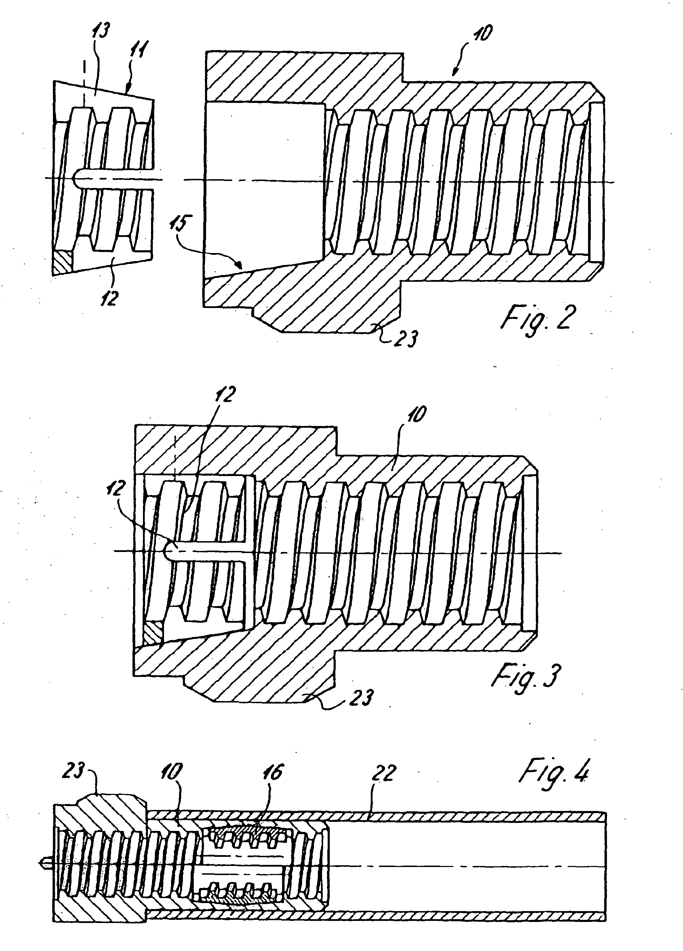

Aus Gründen der vereinfachten Darstellung ist der komplette elektromotorische Möbelantrieb nicht dargestellt. Dieser Möbelantrieb ist je nach Ausführung mit ein oder mehreren Spindelmuttern 10 ausgestattet ist. Jede Spindelmutter 10 ist mit einem zu verstellenden Möbelbauteil gekoppelt. Die jeweilige Verbindung richtet sich nach der Art des Antriebes und der Bauform des zu verstellenden Möbelbauteiles. In den dargestellten Ausführungsbeispielen ist das Innengewinde jeder Spindelmutter 10 ein Trapezgewinde, so dass auch die nicht dargestellten Gewindespindeln Trapezgewindespindeln sind. Entgegen dieser Darstellung könnten die Gewinde auch als Spitzgewinde ausgebildet sein. In den dargestellten Ausführungsbeispielen ist jede Spindelmutter 10 mit einem Gewindeeinsatz ausgestattet, der mit der Spindelmutter 10 in einer festen Verbindung steht, d.h. ist der Antrieb so ausgelegt, dass jede Spindelmutter auf der sich drehenden Spindel verfährt. Demzufolge müsste auch der Gewindeeinsatz mitfahren. Bei anderen Antrieben könnte die Spindelmutter das Abtriebsglied eines Getriebes sein welches sich dreht und demzufolge sich der ganze Antrieb auf der feststehenden Spindel bewegt. Bei der Ausführung nach der Figur 1 ist der Gewindeeinsatz 11 als Kegelstumpf ausgebildet. Es wird in eine entsprechende konisch gestaltete Aufnahme der Spindelmutter 10 eingesetzt, wie die Figur 3 zeigt. Die Innengewindegänge des Gewindeeinsatzes 11 sind Sicherheitsgewindegänge, während die Gewindegänge der Spindelmutter 10 Bewegungsgewindegänge sind, d.h. die Gewindegänge des Gewindeeinsatzes 11 sind so ausgelegt, dass sie ein größeres Spiel zu den Gewindegängen der nicht dargestellten Spindel haben als die Bewegungsgewindegänge der Spindelmutter 10. Demzufolge kommen die Sicherheitsgewindegänge des Gewindeeinsatzes 11 im Normalbetriebszustand der Spindelmutter 10 nicht in Kontakt mit den Gewindegängen der Spindel. Ist jedoch durch Verschleiß das Spiel zwischen den Bewegungsgewindegängen der Spindelmutter 10 und den Gewindegängen der Spindel auf die Größe des Spiels zwischen den Sicherheitsgewindegängen und den Gewindegängen der Spindel angewachsen, kommen die Sicherheitsgewindegänge in Kontakt mit den Gewindegängen der Spindel. Der Gewindeeinsatz 11 könnte aus einem Material bestehen, welches eine höhere Festigkeit als das Material hat, aus dem die Spindelmutter 10 gefertigt ist. In bevorzugter Ausführung wird die Spindelmutter 10 aus einem Kunststoff, vorzugsweise POM gefertigt, während der Gewindeeinsatz 11 auch aus einen Kunststoff, vorzugsweise einem glasfaserverstärkten Kunststoff, aus Metall, beispielsweise einem Sintermetall, einem Buntmetall oder auch aus Stahl gefertigt wird. Es sollte eine Werkstoffkombination angestrebt werden, die dem Anwender signalisiert, dass die Sicherheitsgewindegänge Kontakt mit den Gewindegängen der Spindel bekommen haben. Dies könnte beispielsweise durch Geräusche angezeigt werden. Werden die Bewegungsgewindegänge der Spindelmutter 10 jedoch noch weiter abgenutzt, wird ein erhöhtes Antriebsmoment erforderlich, welches zum Abschalten des Antriebes, beispielsweise durch eine Überstromerkennung führt. Die Bewegungsgewindegänge der Spindelmutter 10 nutzen sich trotz des Kontaktes der Sicherheitsgewindegänge weiter ab, da die Anzahl der Bewegungsgewindegänge deutlich größer ist als die Anzahl der Sicherheitsgewindegänge. Bei der Ausführung nach der Figur 1 ist der Gewindeeinsatz 11 mit drei im gleichen Winkelabstand zu einander angeordneten Schlitzen 12 versehen, die sich in Längsrichtung erstrecken, jedoch nicht über die gesamte Länge des Gewindeeinsatzes 11. Da die Außenfläche des Gewindeeinsatzes 11 konisch ist, kann sich der Gewindeeinsatz 11 gegenüber der Spindel ein kleinwenig verschieben, so dass er, wenn auch gering, zusammengedrückt wird. Dadurch wird die Reibung zwischen den Sicherheitsgewindegängen und den Gewindegängen der Spindel erhöht, so dass ein erhöhter Kraftbedarf notwendig ist, der ausgenutzt werden kann, um den Möbelantrieb zu schalten. Außerdem ist der Gewindeeinsatz 11 noch mit einem durchgehenden Längsschlitz 13 versehen, durch den die Verbindung mit der Spindelmutter 10 geschaffen wird, da in diesen Längsschlitz 13 ein Innensteg 14 der Spindelmutter 10 eingreift. Bei der Darstellung nach der Figur 2 ist die Spindelmutter 10 und der Gewindeeinsatz 11 gegenüber der Darstellung nach der Figur 1 um 90° Grad gedreht, d.h. der Längsschlitz 13 liegt oben. In der Figur 2 ist auch die entsprechend dem Gewindeeinsatz 11 gestaltete konische Aufnahme 15 erkennbar. Die Figur 3 zeigt, dass der Gewindeeinsatz 11 sinngemäß in die Spindelmutter 10 eingesetzt ist.

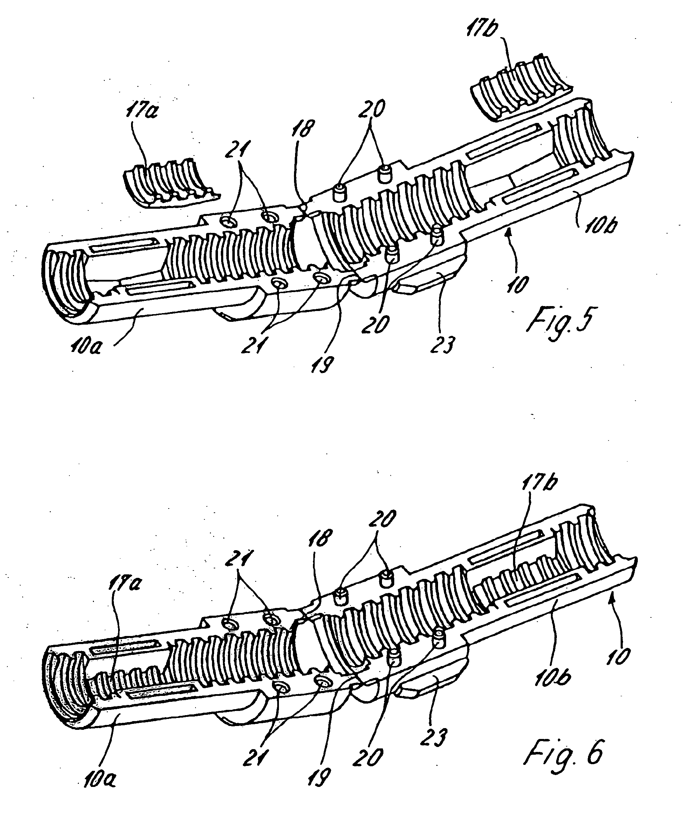

Die Figur 4 zeigt eine weitere Ausführung. Der wesentliche Unterschied zu der Ausführung nach den Figuren 1 bis 3 besteht in dem anders gestalteten Gewindeeinsatz 16, der in diesem Ausführungsbeispiel als zweiteiliges Doppelkegelstumpf ausgestattet ist. Die konischen Außenflächen sind gegensinnig geneigt. Ansonsten treffen die Ausführungen hinsichtlich der Sicherheitsgewindegänge und der Materialien zu, die bei dem Gewindeeinsatz 11 beschrieben sind. Diese Ausführung bietet den Vorteil, dass eine Wirkung des Gewindeeinsatzes 17a, 17b in beide Kraftrichtungen längs der Spindelmutter 10 erwirkt wird. Eine Lösung, einen als Doppelkegelstumpf ausgeführten Gewindeeinsatz in die Spindelmutter einzubringen, zeigen die Figuren 4 bis 6. Der Gewindeeinsatz besteht aus den beiden Gewindeeinsatzhälften 17a und 17b. Die Spindelmutterhälften 17a und 17b sind durch Filmscharniere 18, 19 miteinander verbunden. Nach dem Einlegen der Gewindeeinsatzhälften 17a, 17b in die entsprechenden Aufnahmen werden die beiden Spindelmutterhälften 17a, 17b zusammengeklappt. Damit sie sich nicht gegeneinander in Längsrichtung verschieben, ist im dargestellten Ausführungsbeispiel die Spindelmutterhälfte 17b mit vier vorstehenden Zentrierzapfen 20 versehen, die im zusammengeführten Zustand der beiden Spindelmutterhälften 10a, 10b in entsprechende Bohrungen 21 der Spindelmutterhälfte 10 zentrierend eingreifen. Die Spindelmutter 10 kann in einem entsprechend gestalteten Führungskanal des elektromotorischen Möbelantriebes schließend geführt sein. Sie können jedoch auch über geeignete Verbindungselemente, vorzugsweise durch formschlüssig und/oder kraftschlüssig wirkende Verbindungselemente zusammengehalten werden.

Die Figur 4 zeigt noch, dass auf die Spindelmutter 10 ein Schub- oder ein Hubrohr 22 festgesetzt ist. Die Figuren 1 bis 6 zeigen außerdem, dass die Außenfläche jeder Gewindemutter 10 mit mehreren sich in Längsrichtung erstreckenden Führungsstegen 23 ausgestattet ist, die in entsprechenden Nuten des Flanschrohres oder eines sonstigen angrenzenden Bauteils geführt sind, so dass die Spindelmutter 10 gegen Drehung gesichert ist.

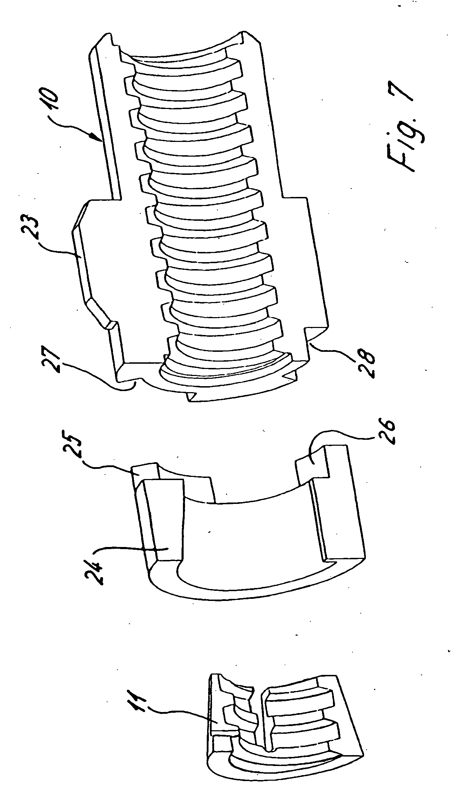

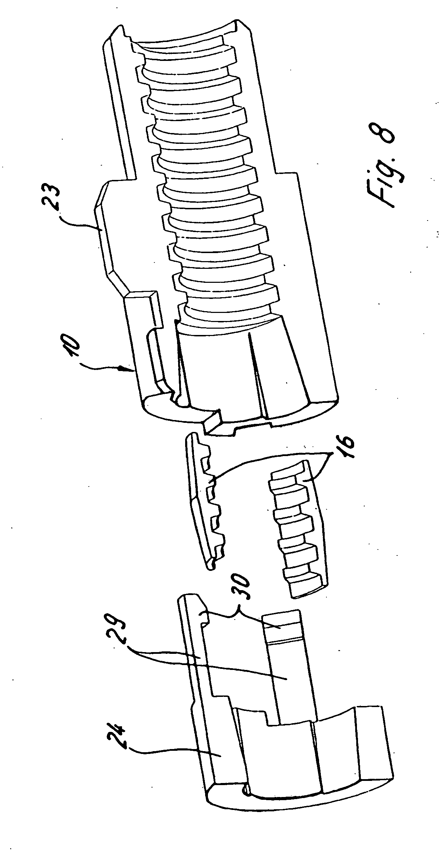

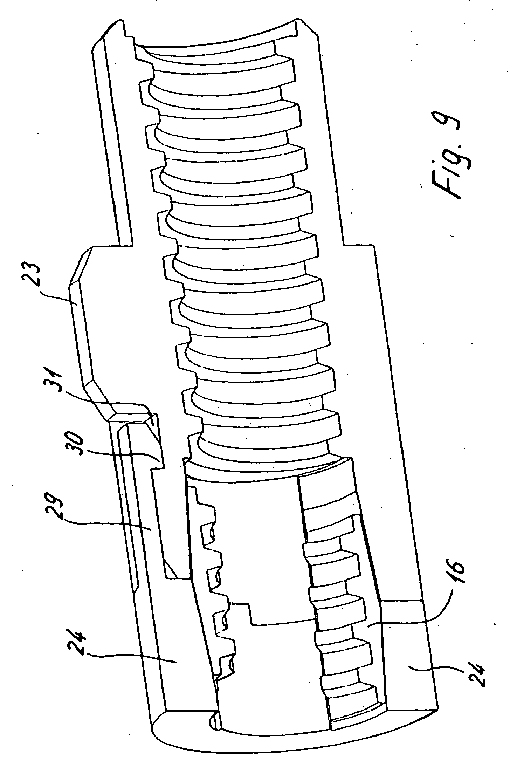

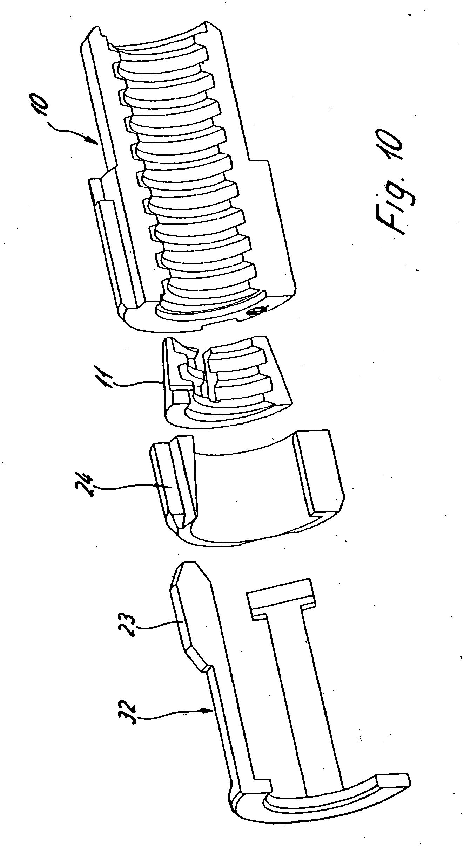

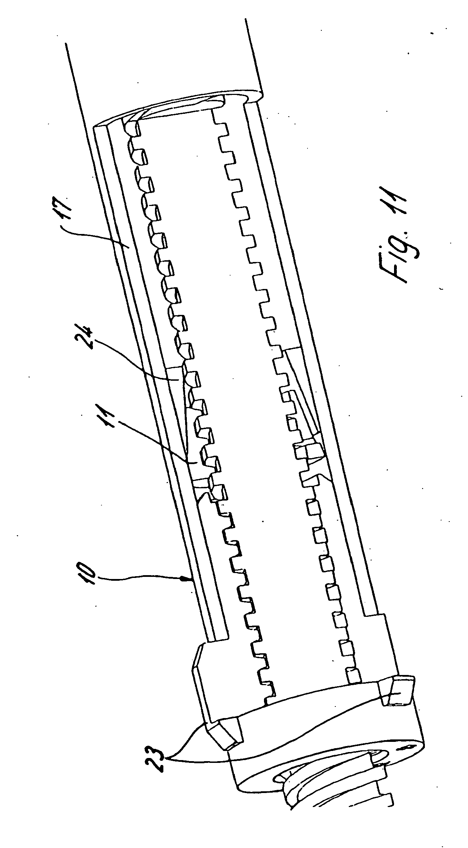

Bei der Ausführung nach der Figur 7 wird wiederum ein gleichartiger Gewindeeinsatz 11 verwendet, der jedoch an eine Stirnfläche der Spindelmutter 10 festgesetzt ist. Dazu wird er in eine Innenkonushülse 24 eingesetzt. Diese ist an der der Spindelmutter 10 zugewandten Seite mit vorstehenden Segmenten 25, 26 ausgestattet, die in entsprechende Ausnehmungen 27, 28 der Spindelmutter 10 eingreifen. Dadurch wird eine formschlüssige Verbindung geschaffen. Diese Ausführung ist besonders zum Nachrüsten von Möbelantrieben geeignet. Bei der Ausführung nach den Figuren 8 und 9 werden wiederum zwei Gewindeeinsätze 16 verwendet, die als Doppelkegel gestaltet sind. Wie die Figur 9 zeigt, liegt der Gewindeeinsatz 16 teilweise in der Innenkonushülse 24 und teilweise in der Spindelmutter 10. Der Scheitelpunkt der beiden Konusflächen liegt genau in der Trennebene zwischen der Innenkonushülse 24 und der Spindelmutter 10. Die Innenkonushülse 24 wird mit der Spindelmutter 10 verrastet. Dazu ist sie mit mehreren im Abstand zueinander stehenden Federzungen 29 ausgestattet, deren freie Enden als Rastnasen 30 ausgebildet sind, die im zusammengesteckten Zustand gemäß der Figur 9 entweder in eine Hinterschneidung oder in eine umlaufende Nut 31 eingreifen. Die Ausführung nach der Figur 10 ist wiederum mit einem Gewindeeinsatz 11 ausgestattet, der als Kegelstumpf gestaltet ist. Im zusammengeführten Zustand liegt er wiederum in einer Innenkonushülse 24. Diese ist durch einen Sicherungskäfig 32 mit der Spindelmutter 10 verbunden. Bei der Ausführung gemäß der Figur 11 steht der Gewindeeinsatz 11 im Abstand zu den Stirnenden der Spindelmutter 10. Der als Kegelstumpf ausgebildete Gewindeeinsatz 11 stützt sich mit seiner Konusfläche an einer Innenkonusfläche ab. Dieser Innenkonus kann in die Spindelmutter 10 eingesetzt oder mit der Spindelmutter 10 ein einstückiges Formteil bilden. Unabhängig von der Ausführung und der Lage des Gewindeeinsatzes 11 bzw. 16 sind alle Ausfiihrungen mit den Führungsstegen 23 ausgestattet.

Der Gewindeeinsatz 11 kann vielfältig gestaltet sein, bevorzugt wird jedoch eine ringförmige Ausbildung. Dieser Ring kann kreissymmetrisch geschlossen sein, er kann aufgetrennt oder auch als Ringabschnitt bzw. als Segment ausgebildet sein. Ferner kann der Gewindeeinsatz ein- oder mehrteilig ausgebildet sein.

Die Erfindung ist nicht auf die dargestellten Ausführungsbeispiele beschränkt. Wesentlich ist, dass die Spindelmutter 10 mit nicht tragenden Gewindegängen ausgestattet ist, wodurch abgeleitet wird, wenn diese Kontakt mit den Gewindegängen der Spindel bekommen. Dies kann beispielsweise durch Geräusche oder wenn eine Schwergängigkeit auftritt, durch eine Überstromerkennung zum Stillsetzen des Möbelantriebes führen.

## Patentansprüche

1. Elektromotorischer Möbelantrieb mit einer Spindel und einer darauf aufgesetzten Spindelmutter (10), **dadurch gekennzeichnet, dass** die Spindelmutter (10) Sicherheitsgewindegänge und Bewegungsgewindegänge aufweist, und dass das Spiel der Sicherheitsgewindegänge, bezogen auf den ursprünglichen Zustand der Spindelmutter (10), gegenüber den Gewindegängen der Spindel größer ist als dass der Bewegungsgewindegänge zu den Gewindegängen der Spindel und dass die Sicherheitsgewindegänge der Spindelmutter (10) Teil eines Gewindeeinsatzes (11) sind, der in die Spindelmutter (10) eingesetzt oder angesetzt ist, und der mit der Spindelmutter (10) in einer Mitnahmeverbindung steht.

2. Elektromotorischen Möbelantrieb nach Anspruch 1, **dadurch gekennzeichnet, dass** die Sicherheitsgewindegänge der Spindelmutter (10) aus einem Werkstoff mit gegenüber den Bewegungsgewindegängen höherer Festigkeit bestehen.

3. Elektromotorischen Möbelantrieb nach Anspruch 2, **dadurch gekennzeichnet, dass** die Sicherheitsgewindegänge der Spindelmutter (10) aus einem glasfaserverstärkten Kunststoff, aus einem Sintermetall, aus Stahl oder aus einem Buntmetall bestehen.

4. Elektromotorischen Möbelantrieb nach Anspruch 1, **dadurch gekennzeichnet, dass** die Sicherheitsgewindegänge der Spindelmutter (10) bei Kontakt mit den Gewindegängen der Spindel eine Brems- oder Blockiereinrichtung bilden.

5. Elektromotorischen Möbelantrieb nach einem oder mehreren der vorhergehenden Ansprüche, **dadurch gekennzeichnet, dass** der Gewindeeinsatz (11) formschlüssig in die Spindelmutter (10) eingesetzt oder angesetzt ist.

6. Elektromotorischen Möbelantrieb nach Anspruch 5, **dadurch gekennzeichnet, dass** der Gewindeeinsatz (11) in eine entsprechend gestaltete Ausnehmung (15) der Spindelmutter (10) eingesetzt ist, oder dass der Gewindeeinsatz (11) an die Spindelmutter (10) angeflanscht ist.

7. Elektromotorischen Möbelantrieb nach Anspruch 6, **dadurch gekennzeichnet, dass** der Gewindeeinsatz (11) mit wenigstens einem Längsschlitz (12, 13) versehen ist, der in einen Steg (14) der Spindelmutter (10) eingreift.

8. Elektromotorischen Möbelantrieb nach Anspruch 7, **dadurch gekennzeichnet, dass** der Gewindeeinsatz (11) einen sich über die gesamte Länge erstreckenden Längsschlitz (13) und mindestens einen sich über einen Teil der Länge erstreckenden Schlitz (12) aufweist, dessen Länge vorzugsweise größer ist als die halbe Länge des Gewindeeinsatzes (12).

9. Elektromotorischen Möbelantrieb nach einem oder mehreren der vorhergehenden Ansprüche 5 bis 8, **dadurch gekennzeichnet, dass** der Gewindeeinsatz (11) als Kegelstumpf ausgebildet ist.

10. Elektromotorischen Möbelantrieb nach einem oder mehreren der vorhergehenden Ansprüche 5 bis 8, **dadurch gekennzeichnet, dass** der Gewindeeinsatz (11) als Doppelkegelstumpf ausgebildet ist, und dass die konischen Außenflächen gegensinnig geneigt sind.

11. Elektromotorischen Möbelantrieb nach einem oder mehreren der vorhergehenden Ansprüche 5 bis 10, **dadurch gekennzeichnet, dass** die mit dem Gewindeeinsatz (11) ausgestattete Spindelmutter (10) aus zwei Halbschalen (10a, 1 0b) gebildet ist.

12. Elektromotorischen Möbelantrieb nach Anspruch 11, **dadurch gekennzeichnet, dass** die die Spindelmutter (10) bildenden Halbschalen (10a, 10b) über wenigstens ein, vorzugsweise über zwei Filmscharniere (18, 19) miteinander verbunden sind.

13. Elektromotorischen Möbelantrieb nach Anspruch 11 oder 12, **dadurch gekennzeichnet, dass** eine der Halbschalen (10b) gegenüber der Trennfläche vorstehende Zentrierstifte (20) und die zweite Halbschale (10a) entsprechende Zentrierbohrungen 21 aufweist.

14. Elektromotorischen Möbelantrieb nach einem oder mehreren der vorhergehenden Ansprüche 1 bis 13, **dadurch gekennzeichnet, dass** die Spindelmutter (10) im Querschnitt Kreisringförmig gestaltet ist.

15. Elektromotorischen Möbelantrieb nach Anspruch 14, **dadurch gekennzeichnet, dass** die Spindelmutter (10) mit gegenüber der Außenfläche vorstehenden Führungsstegen ausgestattet ist.

16. Elektromotorischen Möbelantrieb nach einem oder mehreren der vorhergehenden Ansprüche 1 bis 15, **dadurch gekennzeichnet, dass** der Gewindeeinsatz (11, 16) in eine Innenkonushülse (24) eingesetzt ist, die formschlüssig mit der Spindel verbunden ist.

17. Elektromotorischen Möbelantrieb nach Anspruch 16, **dadurch gekennzeichnet, dass** die Innenkonushülse (24) an der der Spindelmutter (10) zugewandten Stirnfläche Segmente (25, 26) aufweist, die in Ausnehmungen (27, 28) eingreifen.

18. Elektromotorischen Möbelantrieb nach einem oder mehreren der vorhergehenden Ansprüche 16 oder 17, **dadurch gekennzeichnet, dass** an der Innenkonushülse (24) Federzungen (29) angesetzt sind, deren freie Enden als Rastnasen (30) ausgebildet sind, die in eine Nut (31) oder in Hinterschneidungen eingreifen, und dass der Gewindeeinsatz (16) als Doppelkegelstumpf ausgebildet ist, und dass ein Teil seiner konischen Fläche in der Innenkonushülse (24) und der andere Teil in der Spindelmutter (10) angeordnet ist.

19. Elektromotorischen Möbelantrieb nach einem oder mehreren der vorhergehenden Ansprüche 16 bis 18, **dadurch gekennzeichnet, dass** die Innenkonushülse (24) mittels eines Sicherungskäfigs (32) an der Spindelmutter (10) festgelegt ist.

20. Elektromotorischen Möbelantrieb nach einem oder mehreren der vorhergehenden Ansprüche 16 bis 19, **dadurch gekennzeichnet, dass** der Gewindeeinsatz (11) im Abstand zu den Stirnendbereichen einer zweiteiligen Spindelmutter (17) angeordnet ist, und dass sich der Gewindeeinsatz (11) an der Innenkonushülse (24) abstützt, die in die Spindelmutter (17) eingesetzt oder mit ihr ein einstückiges Formteil bildet.

21. Elektromotorischen Möbelantrieb nach einem oder mehreren der vorhergehenden Ansprüche 1 bis 4, **dadurch gekennzeichnet, dass** in wenigstens einem Gewindegang der Spindelmutter (10, 17) ein Kontaktelement eingesetzt ist, welches im Abstand, bezogen auf den ursprünglichen Zustand der Spindelmutter (10, 17) zu einer Fläche des Gewindeganges steht.

22. Elektromotorischen Möbelantrieb nach einem oder mehreren der vorhergehenden Ansprüche 1 bis 4, **dadurch gekennzeichnet, dass** in wenigstens einem Sicherheitsgewindegang ein Kontaktelement derart eingesetzt ist, dass bei Kontakt mit den Gewindegängen der Spindel ein Signal auslösbar ist.

23. Elektromotorischer Möbelantrieb nach einem oder mehreren der vorhergehenden Ansprüche 1 bis 22, **dadurch gekennzeichnet, dass** jeder Gewindeeinsatz (11) ringförmig ausgebildet ist und dass der Ring kreissymmetrisch geschlossen, aufgetrennt oder als Ringabschnitt ausgebildet ist.

24. Elektromotorischer Möbelantrieb nach einem oder mehreren der vorhergehenden Ansprüche 1 bis 23, **dadurch gekennzeichnet, dass** der Gewindeeinsatz (11) ein- oder mehrteilig ausgebildet ist.

## Claims

1. Electromotive furniture drive with a spindle and with a spindle nut (10) placed on the latter, **characterized in that** the spindle nut (10) has safety thread flights and movement thread flights, and **in that** the clearance of the safety thread flights with respect to the original state of the spindle nut (10) is greater in relation to the thread flights of the spindle than that of the movement thread flights in relation to the thread flights of the spindle, and **in that** the safety thread flights of the spindle nut (10) are part of a threaded insert (11) which is inserted into or attached to the spindle nut (10) and which is in driving connection with the spindle nut (10).

2. Electromotive furniture drive according to Claim 1, **characterized in that** the safety thread flights of the spindle nut (10) consist of a material having a higher strength than the movement thread flights.

3. Electromotive furniture drive according to Claim 2, **characterized in that** the safety thread flights of the spindle nut (10) consist of a glass-fibre-reinforced plastic, of a sintered metal, of steel or of a nonferrous metal.

4. Electromotive furniture drive according to Claim 1, **characterized in that** the safety thread flights of the spindle nut (10), upon contact with the thread flights of the spindle, form a braking or blocking device.

5. Electromotive furniture drive according to one or more of the preceding claims, **characterized in that** the threaded insert (11) is inserted into or attached to the spindle nut (10) with a form fit.

6. Electromotive furniture drive according to Claim 5, **characterized in that** the threaded insert (11) is inserted into a corresponding configured recess (15) of the spindle nut (10), or **in that** the threaded insert (11) is flanged onto the spindle nut (10).

7. Electromotive furniture drive according to Claim 6, **characterized in that** the threaded insert (11) is provided with at least one longitudinal slot (12, 13) which engages into a web (14) of the spindle nut (10).

8. Electromotive furniture drive according to Claim 7, **characterized in that** the threaded insert (11) has a longitudinal slot (13) extending over the entire length and at least one slot (12) which extends over part of the length and the length of which is preferably greater than half the length of the threaded insert (12).

9. Electromotive furniture drive according to one or more of the preceding Claims 5 to 8, **characterized in that** the threaded insert (11) is designed as a cone frustum.

10. Electromotive furniture drive according to one or more of the preceding Claims 5 to 8, **characterized in that** the threaded insert (11) is designed as a double cone frustum, and **in that** the conical outer faces are inclined contradirectionally.

11. Electromotive furniture drive according to one or more of the preceding Claims 5 to 10, **characterized in that** the spindle nut (10) equipped with the threaded insert (11) is formed from two half-shells (10a, 10b).

12. Electromotive furniture drive according to Claim 11, **characterized in that** the half-shells (10a, 10b) forming the spindle nut (10) are connected to one another via at least one, preferably via two, film hinges (18, 19).

13. Electromotive furniture drive according to Claim 11 or 12, **characterized in that** one of the half-shells (10b) has centring pins (20) projecting with respect to the parting plane and the second half-shell (10a) has corresponding centring bores (21).

14. Electromotive furniture drive according to one or more of the preceding Claims 1 to 13, **characterized in that** the spindle nut (10) has an annular configuration in cross section.

15. Electromotive furniture drive according to Claim 14, **characterized in that** the spindle nut (10) is equipped with guide webs projecting with respect to the outer face.

16. Electromotive furniture drive according to one or more of the preceding Claims 1 to 15, **characterized in that** the threaded insert (11, 16) is inserted into an inner conical sleeve (24) which is connected to the spindle with a form fit.

17. Electromotive furniture drive according to Claim 16, **characterized in that** the inner conical sleeve (24) has, on the end face facing the spindle nut (10), segments (25, 26) which engage into recesses (27, 28).

18. Electromotive furniture drive according to one or more of the preceding Claims 16 or 17, **characterized in that** the inner conical sleeve (24) has attached to it spring tongues (29), the free ends of which are designed as latching noses (30) which engage into a groove (31) or into undercuts, and **in that** the threaded insert (16) is designed as a double cone frustum, and **in that** part of its conical face is arranged in the inner conical sleeve (24) and the other part is arranged in the spindle nut (10).

19. Electromotive furniture drive according to one or more of the preceding Claims 16 to 18, **characterized in that** the inner conical sleeve (24) is fixed to the spindle nut (10) by means of a securing cage (32).

20. Electromotive furniture drive according to one or more of the preceding Claims 16 to 19, **characterized in that** the threaded insert (11) is arranged at a distance from the end regions of a two-part spindle nut (17), and **in that** the threaded insert (11) is supported on the inner conical sleeve (24) which is inserted into the spindle nut (17) and which forms with it a one-piece moulding.

21. Electromotive furniture drive according to one or more of the preceding Claims 1 to 4, **characterized in that** at least one thread flight of the spindle nut (10, 17) has inserted in it a contact element which stands at a distance from a face of the thread flight with respect to the original state of the spindle nut (10, 17).

22. Electromotive furniture drive according to one or more of the preceding Claims 1 to 4, **characterized in that** a contact element is inserted in at least one safety thread flight in such a way that, upon contact with the thread flights of the spindle, a signal can be triggered.

23. Electromotive furniture drive according to one or more of the preceding Claims 1 to 22, **characterized in that** each threaded insert (11) is designed in the form of a ring, and **in that** the ring is designed to be closed circular-symmetrically or to be separated or is designed as a ring portion.

24. Electromotive furniture drive according to one or more of the preceding Claims 1 to 23, **characterized in that** the threaded insert (11) is of one-part or multipart design.

## Revendications

1. Entraînement pour meuble à moteur électrique comprenant une broche sur laquelle est montée un écrou de broche (10), **caractérisé en ce que** l'écrou de broche (10) présente des pas de sécurité et des pas de déplacement, et **en ce que** le jeu des pas de sécurité, par rapport à l'état originel de l'écrou de broche (10), vis-à-vis des pas de la broche et plus important que celui des pas de déplacement, vis-à-vis des pas de la broche, et plus important que celui pas de sécurité de l'écrou de broche (10) font partie d'un insert de filetage (11) qui est inséré ou mis en place dans l'écrou de broche (10) et qui est en liaison d'entraînement avec l'écrou de broche (10).

2. Entraînement pour meuble à moteur électrique selon la revendication 1, **caractérisé en ce que** les pas de sécurité de l'écrou de broche (10) se composent d'un matériau à résistance plus élevée par rapport aux pas de mouvement.

3. Entraînement pour meuble à moteur électrique selon la revendication 2, **caractérisé en ce que** les pas de sécurité de l'écrou de broche (10) se composent d'une matière plastique renforcée par fibres de verre, d'un métal fritté, d'acier ou d'un métal non ferreux.

4. Entraînement pour meuble à moteur électrique selon la revendication 1, **caractérisé en ce que** les pas de sécurité de l'écrou de broche (10) forment au contact des pas de la broche un dispositif de freinage ou de blocage.

5. Entraînement pour meuble à moteur électrique selon l'une ou plusieurs quelconques des revendications précédentes, **caractérisé en ce que** l'insert de filetage (11) est inséré ou mis en place par complémentarité de forme dans l'écrou de broche (10).

6. Entraînement pour meuble à moteur électrique selon la revendication 5, **caractérisé en ce que** l'insert de filetage (11) est inséré dans un évidement (15) conçu en conséquence de l'écrou de broche (10) ou **en ce que** l'insert de filetage (11) est bridé sur l'écrou de broche (10).

7. Entraînement pour meuble à moteur électrique selon la revendication 6, **caractérisé en ce que** l'insert de filetage (11) est pourvu d'au moins une fente longitudinale (12, 13) qui s'engage dans une nervure (14) de l'écrou de broche (10).

8. Entraînement pour meuble à moteur électrique selon la revendication 7, **caractérisé en ce que** l'insert de filetage (11) présente une fente longitudinale (13) s'étendant sur toute la longueur et au moins une fente (12) s'étendant sur une partie de la longueur, dont la longueur est de préférence supérieure à la demie longueur de l'insert de filetage (12).

9. Entraînement pour meuble à moteur électrique selon l'une ou plusieurs quelconques des revendications 5 à 8, **caractérisé en ce que** l'insert de filetage (11) est réalisé comme un cône tronqué.

10. Entraînement pour meuble à moteur électrique selon l'une ou plusieurs quelconques des revendications 5 à 8, **caractérisé en ce que** l'insert de filetage (11) est réalisé à la manière d'un double cône tronqué, et **en ce que** les surfaces extérieures coniques sont inclinées en sens contraires.

11. Entraînement pour meuble à moteur électrique selon l'une ou plusieurs quelconques des revendications 5 à 10, **caractérisé en ce que** l'écrou de broche (10) équipé de l'insert de filetage (11) est constitué de deux demi-coques (10a, 10b).

12. Entraînement pour meuble à moteur électrique selon la revendication 11, **caractérisé en ce que** les demi-coques (10a, 10b) constituant l'écrou de broche (10) sont reliées par au moins un, de préférence deux charnières à film (18, 19).

13. Entraînement pour meuble à moteur électrique selon la revendication 11 ou 12, **caractérisé en ce que** l'une des demi-coques (10b) présente des goupilles de centrage (20) en saillie par rapport à la surface de séparation et la seconde demi-coque (10a) présente des perçages de centrage (21) correspondants.

14. Entraînement pour meuble à moteur électrique selon l'une ou plusieurs quelconques des revendications 1 à 13, **caractérisé en ce que** la section de l'écrou de broche (10) est conçue en forme d'anneau de cercle.

15. Entraînement pour meuble à moteur électrique selon la revendication 14, **caractérisé en ce que** l'écrou de broche (10) est équipé de nervures de guidage en saillie par rapport à la surface extérieure.

16. Entraînement pour meuble à moteur électrique selon l'une ou plusieurs quelconques des revendications 1 à 15, **caractérisé en ce que** l'insert de filetage (11, 16) est inséré dans une douille à cône intérieur (24) qui est reliée par complémentarité de forme avec la broche.

17. Entraînement pour meuble à moteur électrique selon la revendication 16, **caractérisé en ce que** la douille à cône intérieur (24) présente sur la surface frontale dirigée vers l'écrou de broche (10) des segments (25, 26) qui s'engagent dans des évidements (27, 28).

18. Entraînement pour meuble à moteur électrique selon l'une ou plusieurs quelconques des revendications 16 ou 17, **caractérisé en ce que** sur la douille à cône intérieur (24) sont mises en place des languettes flexibles (29), dont les extrémités libres sont réalisées comme des nez d'encliquetage (30) qui s'engagent dans une rainure (31) ou dans des contre-dépouilles, et **en ce que** l'insert de filetage (16) est réalisé comme un double cône tronqué, et **en ce qu'**une partie de sa surface conique est disposée dans la douille à cône intérieur (24) et l'autre partie dans l'écrou de broche (10).

19. Entraînement pour meuble à moteur électrique selon l'une ou plusieurs quelconques des revendications 16 à 18, **caractérisé en ce que** la douille à cône intérieur (24) est immobilisée au moyen d'une cage de sécurité (32) sur l'écrou de broche (10).

20. Entraînement pour meuble à moteur électrique selon l'une ou plusieurs quelconques des revendications 16 à 19, **caractérisé en ce que** l'insert de filetage (11) est disposé à distance des zones d'extrémité frontale d'un écrou de broche (17) en deux parties, et **en ce que** l'insert de filetage (11) s'appuie sur la douille à cône intérieur (24) qui est insérée dans l'écrou de broche (17) ou forme avec elle une pièce préformée d'un seul tenant.

21. Entraînement pour meuble à moteur électrique selon l'une ou plusieurs quelconques des revendications 1 à 4, **caractérisé en ce qu'**un élément de contact qui se trouve à distance d'une surface du pas, par rapport à l'état originel de l'écrou de broche (10, 17), est inséré dans au moins un pas de l'écrou de broche (10, 17).

22. Entraînement pour meuble à moteur électrique selon l'une ou plusieurs quelconques des revendications 1 à 4, **caractérisé en ce qu'**un élément de contact est inséré dans au moins un pas de sécurité de telle sorte qu'au contact des pas de la broche, un signal puisse être déclenché.

23. Entraînement pour meuble à moteur électrique selon l'une ou plusieurs quelconques des revendications 1 à 22, **caractérisé en ce que** chaque insert de filetage (11) est réalisé en forme d'anneau et **en ce que** l'anneau est fermé, séparé de manière symétrique au cercle ou est réalisé comme une section annulaire.

24. Entraînement pour meuble à moteur électrique selon l'une ou plusieurs quelconques des revendications 1 à 23, **caractérisé en ce que** l'insert de filetage (11) est réalisé en une ou plusieurs parties.
